# EUROPÄISCHE PATENTSCHRIFT

(11) **EP 0 582 948 B1**
(45) Veröffentlichungstag und Bekanntmachung des Hinweises auf die Patenterteilung: **11.11.1998**
(21) Anmeldenummer: 93112456.4
(22) Anmeldetag: 04.08.1993
(51) Int. Cl.: G11B 11/10, G11B 13/04

(54) **Rauschanteilverringerung im Datensignal und optische Abtastvorrichtung**
Reduction of noise component in data signal and optical pick-up
Réduction de la composante de bruit dans un signal de données et un lecteur optique

(30) Priorität: 13.08.1992 DE 4226777
(43) Veröffentlichungstag der Anmeldung: 16.02.1994
(73) Patentinhaber: DEUTSCHE THOMSON-BRANDT GMBH, 78048 Villingen-Schwenningen (DE)
(72) Erfinder: Chikazawa, Yoshiharu, Koutou-ku, Tokyo 135 (JP); Kawamura, Akira, Hachiouji-shi, Tokyo 193 (JP)

(56) Entgegenhaltungen:
- EP-A- 0 156 555
- EP-A- 0 310 795
- EP-A- 0 312 214
- PATENT ABSTRACTS OF JAPAN vol. 11, no. 40 (P-544) 5. Februar 1987 & JP-A-61 208 674
- PATENT ABSTRACTS OF JAPAN vol. 14, no. 585 (P-1148) 27. Dezember 1990 & JP-A-22 52 124
- APPLIED OPTICS. Bd. 25, Nr. 22, 15. November 1986, NEW YORK US Seiten 3990 - 3995 TORAZAWA ET AL. 'Erasable digital audio disk system'

## Beschreibung

Die Erfindung betrifft ein Verfahren und eine Vorrichtung zum Verringern der Rauschanteile im Datensignal für eine optische Abtastvorrichtung zum Lesen und/oder Beschreiben eines magneto-optischen Aufzeichnungsträgers, wobei eine Lichtquelle Licht auf den Aufzeichnungsträger strahlt und das vom Aufzeichnungsträger reflektierte Licht in Abhängigkeit von seiner Polarisationsrichtung auf einen ersten Photodetektor oder auf einen zweiten Photodetektor gelenkt wird. Insbesondere im Zusammenhang mit Aufzeichnungsträgern, auf denen Daten mittels Pits und in magnetischen Domänen gespeichert sind, sind Einrichtungen vorzusehen, die das gleichzeitige Lesen der Daten ermöglichen und diese trotz Überlagerung auf dem Aufzeichnungsträger möglichst ohne gegenseitige Beeinflussung voneinander trennen. Rauschanteile treten jedoch auch bereits bei magneto-optischen Platten auf, bei denen die Daten ausschließlich in magnetischen Domänen gespeichert sind, da die magneto-optischen Platten unterschiedliche optische Eigenschaften, beispielsweise unterschiedliche Doppelbrechung aufweisen, so daß der Polarisationstrahlteiler, der nur für einen Typ einer magneto-optischen Platte optimal justiert werden kann, infolge Abweichungen von seiner optimalen Lage zu Störanteilen führt.

Zum Lesen eines optischen oder magneto-optischen Aufzeichnungsträgers ist es bereits bekannt, aus der Differenz der Photospannungen des ersten und zweiten Photodetektors, das die in den magnetischen Domänen des Aufzeichnungsträgers gespeicherten Daten darstellende Datensignal zu gewinnen und aus der Summe der Photospannungen des ersten und zweiten Photodetektors, das die in den Pits des Aufzeichnungsträgers gespeicherten Daten darstellende Datensignal zu gewinnen, vgl. DE-OS 37 32 874 A1. Hierzu werden optische Abtastvorrichtungen verwendet, die einen Summationsverstärker und einen Differenzverstärker enthalten, wobei das die in den Pits des Aufzeichnungsträgers gespeicherten Daten darstellende Datensignal am Ausgang des Summationsverstärkers entweder über ein amplituden- und phasenkompensierendes Netzwerk und einen Modulator, dem Lasertreiber oder in einer anderen Ausführung einem Teiler zur Trennung der Datensignale zugeführt wird. Bei einem sowohl magnetische Domänen als auch Pits aufweisenden Aufzeichnungsträger würde die Intensität des reflektierten Lichts ständig schwanken und sich störend dem Datensignal überlagern. Zum Vermeiden dieser Überlagerung wird in einer ersten Ausführung die Intensität des reflektierten Lichts mittels Modulator konstant gehalten. Am Ausgang des Differenzverstärkers ist dann ein Datensignal abnehmbar, das die in den magnetischen Domänen gespeicherten Daten darstellt. Die in den Pits enthaltenden Daten sind im Regelsignal des Modulators enthalten. Da die Lichtleistung der Lichtquelle mit dem von den Pits ausgehenden Datensignal moduliert wird, bezeichnet man diese Methode auch als Laser-Rückkopplungsverfahren. Dabei erweist sich jedoch das Einstellen der Laser-Rückkopplungsverstärkung als besonders schwierig, da die Laser-Rückkopplungsverstärkung auf den am besten geeigneten Wert für jeden Aufzeichnungsträger oder jedes Pit des Aufzeichnungsträgers eingestellt werden muß. Das Laser Laser-Rückkopplungssystem ist als Breitbandverstärker auszuführen und neigt daher leicht zum Schwingen. Der Aufwand zum Trennen der in den magnetischen Domänen und den Pits des Aufzeichnungsträgers gespeicherten Daten wird mit einer zweiten Ausführung einer optischen Abtastvorrichtung verringert, die zum Trennen der Datensignale einen Teiler verwendet. Die Lichtquelle wird nicht mit dem Datensignal der Pits moduliert, so daß der Modulator sowie das amplituden-und phasenkompensierende Neztwerk entfallen. Das Differenzsignal zwischen den Fotodioden ist im wesentlichen das in den magnetischen Domänen gespeicherte Datensignal, welches jedoch von den in den Pits gespeicherten Daten in Form einer Amplitudenmodulation überlagert ist. Durch die Verwendung eines Teilers wird zwar das in den Pits gespeicherte Datensignal im wesentlichen von dem in den magnetischen Domänen gespeicherten Datensignal abgetrennt, wobei jedoch insbesondere mit den Kanten der Pits im Zusammenhang stehender Rauschanteile im Datensignal der magnetischen Domänen verbleiben.

Da im Gegensatz zu dem in den Pits gespeicherten Datensignal das in den magnetischen Domänen gespeicherten Datensignal durch erneutes Beschreiben veränderbar ist, wird das in den magnetischen Domänen gespeicherte Datensignal auch als RAM-Signal and das in den Pits gespeicherte Datensignal als ROM- Signal bezeichnet. Durch die elektronische Trennung des ROM- und RAM-Signals wird zwar der Aufwand verringert, jedoch gleichzeitig erhöhen sich die beispielsweise von den Pits ausgehenden Rauschanteile im Datensignal der magnetischen Domänen.

Zum Verringern der Rauschanteile im Datensignal ist es bekannt unabhängig von den optischen Eigenschaften des Aufzeichnungsträgers die Intensität des vom Aufzeichnungsträger reflektierten bzw. das den Aufzeichnungsträger durchstrahlenden Lichts auf einen konstanten Wert zu regeln, vgl. EP PS 310 812 B1. Das Verringern der Rauschanteile wird ausschließlich auf den Wege der Laser-Rückkopplung, die einen hohen Aufwand erfordert, erreicht.

Es ist deshalb Aufgabe der Erfindung, Rauschanteile im Datensignal auch ohne Laser-Rückkopplung mit geringerem Aufwand zu verringern.

Erfindungsgemäß wird diese Aufgabe dadurch gelöst, daß das vom Aufzeichnungsträger reflektierte Licht mit mindestens einem Photodetektor in ein elektrisches Signal umgewandelt wird, das mit einem Differenzglied differenziert und nach der Differentiation zum Verringern von Rauschanteilen im Datensignal verwendet wird. Zur Bereistellung des elektrischen Signals kann entweder ein Photodetektor, mit dem das vom Aufzeichnungsträger reflektierte Licht detektiert wird oder es können die zum Detektieren der Polarisationsanteile des vom Aufzeichnungsträger reflektierten Lichtes verwendeten zwei Photodetektoren verwendet werden, deren Ausgangssignale durch Summation in einem Summierverstärker zusammengeführt sind. Die Verwendung des elektrischen Signals zum Verringern der Rauschanteile erfolgt derart, daß das differenzierte elektrische Signal in einem Differenzverstärker mit dem mit dem ersten und zweiten Photodetektor sowie einem Differenzverstärker detektierten Signal der magnetischen Domänen zusammengeführt wird.

Zur Durchführung des Verfahrens sind optische Abtastvorrichtungen vorgesehen, die ein Differenzierglied bzw. einen Differentialverstärker und einen Differenzverstärker aufweisen. Dem Differenzierglied wird ein dem vom optischen Aufzeichnungsträger reflektierten Licht äquivalentes elektrisches Signal zugeführt, das entweder mit einem Photodetektor oder durch Summation der polarisiertes Licht detektierenden zwei Photodektoren bereitgestellt wird. Zum Verringern der Rauschanteile im von den magnetischen Domänen bereitgestellten Datensignal wird das elektrische Signal am genannten Differenzverstärker angelegt, dem das differenzierte elektrische Signal zugeführt wird, so daß am Ausgang des Differenzverstärkers ein hinsichtlich Rauschanteile verringertes Datensignal, welches den in den magnetischen Domänen gespeicherten Daten entspricht, verfügbar ist. Dieses um Rauschanteile verringerte Datensignal wird dann in bekannter Weise einem Teiler zugeführt, an dem das ROM-Signal angelegt ist.

Durch das Differenzieren des elektrischen Signals, das dem vom optischen Aufzeichnungsträger reflektierten Licht äquivalent ist, werden insbesondere von den Pits des Aufzeichnungsträgers ausgehende Rauschanteile verringert, ohne daß hierzu eine Laser-Rückkopplung bzw. eine Regelung des reflektierten Lichts auf einen konstanten Wert erforderlich ist. Da das Trennen des ROM- und RAM-Signals und sowie das Verringern der Rauschanteile ausschließlich auf elektrischen Wege und ohne Laser-Rückkopplung realisiert werden, erfordern das Verfahren und die Vorrichtung zur Durchführung des Verfahrens einen geringen Aufwand.

Die Erfindung wird nachfolgend anhand von zwei Ausführungsbeispielen in Zeichnungen näher erlautert. Es zeigen:
Fig. 1: Prinzipschaltbild einer optischen Abtastvorrichtung mit unmittelbarer Rauschanteilverringerung,
Fig. 2: Prinzipschaltbild einer optischen Abtastvorrichtung mit mittelbarer Rauschanteilverringerung.

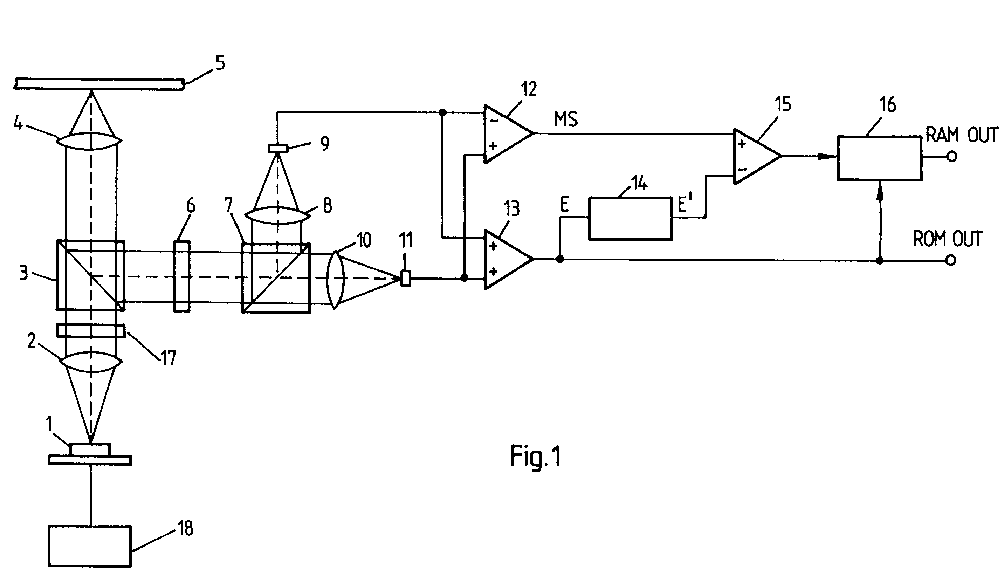

Zum Verringern der Rauschanteile im von einem Aufzeichnungsträger detektierten Datensignal, bei dem Daten sowohl in Pits als auch in magnetischen Domänen gespeichert sind, wird ein dem vom optischen Aufzeichnungsträger 5 reflektierten Licht entsprechendes elektrisches Signal E verwendet, das einem Differenzierglied 14 zugeführt wird, dessen Ausgang mit einem Differenzverstärker verbunden ist, dem das mit zwei Photodetektoren und einem Differenzverstärker detektierte Datensignal MS, welches den in den magnetischen Domänen gespeicherten Daten entspricht, zugeführt wird. Am Ausgang des Differenzverstärkers 15 steht dann ein Datensignal mit verringertem Rauschanteil zur Verfügung, dessen Amplitudenmodulation dann in einem Teiler abgetrennt wird. Zur Durchführung dieses Verfahrens wird eine Anordnung gemäß Fig. 1 verwendet, die eine Lichtquelle 1 in Form eines Lasers aufweist, dessen Licht über eine erste Linse 2 und einen ersten Prismenstrahlteiler 3 sowie über eine zweite Linse 4 auf dem Aufzeichnungsträger 5 fokussiert wird. Vom Aufzeichnungsträger 5, der sowohl in Pits als auch in magnetischen Domänen gespeicherte Daten enthält, wird das Licht reflektiert und gelangt über die zweite Linse 4 sowie den ersten Prismenstrahlteiler 3 und eine λ/2 Platte 6 zu einem Polarisationstrahlteiler 7. Mit dem Polarisationstrahlteiler 7 wird das reflektierte Licht den Polarisationsrichtungen entsprechend über eine dritte Linse 8 auf einen ersten Photodetektor 9 bzw. über eine vierte Linse 10 auf einen zweiten Photodetektor 11 gerichtet. Die Ausgänge der Photodetektoren 9 und 11 sind sowohl mit einem ersten Differenzverstärker 12 als auch mit einem Summationsverstärker 13 verbunden. Während am Ausgang des Summationsverstärkers 13 das den in den Pits des Aufzeichnungsträgers 5 gespeicherten Daten entsprechende Datensignal ROM-OUT unmittelbar verfügbar ist, weist das am Ausgang des Differenzverstärkers 12 verfügbare Datensignal MS, welches im wesentlichen das den in den magnetischen Domänen des Aufzeichnungsträgers 5 gespeicherten Daten entsprechende Datensignal darstellt, eine durch die Pits des Aufzeichnungsträgers 5 bedingte Amplitudenmodulation sowie insbesondere von den Kanten der Pits ausgehende Rauschanteile auf. Insbesondere zum Verringern der Rauschanteile im Datensignal MS ist am Summationsverstärker 13 ein Differenzierglied 14 angeschlossen, das vorzugsweise von einem Differentiationsverstärker gebildet wird. Das dem vom optischen Aufzeichnungsträger 5 reflektierten Licht entsprechende elektrische Signal E am Ausgang des Summationsverstärkers 13 wird mit dem Differenzierglied 14 differenziert und einem am Differenzierglied 14 angeschlossenen Differenzverstärker 15 zugeführt, dessen anderer Eingang mit dem Ausgang des ersten Differenzverstärkers 12 verbunden ist. Am Ausgang des zweiten Differenzverstärkers 15 ist ein bereits um Rauschanteile verringertes Datensignal MS verfügbar, das jedoch noch eine mit dem Datensignal ROM modulierte Amplitudenmodulation aufweist. Zur Bereitstellung des auf dem Aufzeichnungsträger 5 in magnetischen Domänen gespeicherten Daten entsprechenden Datensignals RAM-OUT ist deshalb am Ausgang des zweiten Differenzverstärkers 15 ein Teiler 16 angeschlossen, dem gleichzeitig das Datensignal ROM-OUT zugeführt wird und der eine Abtrennung der Amplitudenmodulation vom Datensignal MS bewirkt, so daß am Ausgang des Teilers 16 ein den Daten, die in den magnetischen Domänen des Aufzeichnungsträgers 5 gespeichert sind, entsprechendes Datensignal RAM-OUT zur Verfügung steht. Die Fig. 1 entsprechende optische Abtastvorrichtung weist somit keine Rückkopplung über einen Lasertreiber 18 zur Lichtquelle 1 auf, so daß hinsichtlich Rauschanteile verringerte Datensignale ROM-OUT und RAM-OUT ohne Laser-Rückkopplung in vorteilhafter Weise bereitgestellt werden. In Fig. 1 ist weiterhin eine λ/2 Platte 17 vorgesehen, die jedoch nur erforderlich ist, wenn die Lichtquelle 1 nicht bereits eine polarisiertes Licht bereitstellende Lichtquelle 1 ist. Bei der Fig. 1 entsprechenden Darstellung wurde bewußt auf die Angabe der zur Fokussierung und Spurführung erforderlichen Einrichtungen verzichtet, um besonders hervorzuheben, daß eine Trennung der Datensignale RAM-OUT und ROM-OUT bei gleichzeitiger Verringerung der Rauschanteile ohne Einflußnahme auf die Lichtquelle 1 ermöglicht wird. Der Begriff der unmittelbaren Rauschanteilverringerung wurde hinsichtlich Fig. 1 gewählt, da die zur Detektion der in den magnetischen Domänen gespeicherten Daten erforderlichen Einrichtungen in vorteilhafter Weise auch zum Verringern der Rauschanteile verwendet werden können.

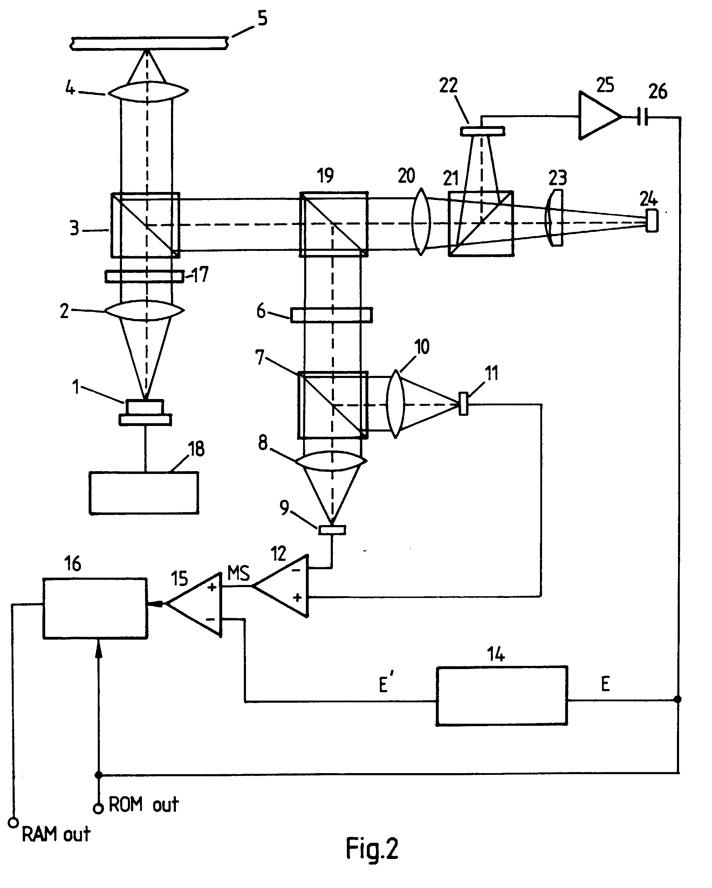

Eine optische Abtastvorrichtung zur mittelbaren Rauschanteilverringerung im Datensignal ist in Fig. 2 dargestellt. Für Fig. 1 entsprechende Gegenstände wurden dabei die gleichen Bezugszeichnen verwendet. Die optische Abtastvorrichtung gemäß Fig. 2 weist zusätzlich einen zweiten Prismenstrahlteiler 19, einen dritten Prismenstrahlteiler 21, eine fünfte Linse 20, eine sechste Linse 23 sowie einen dritten Photodetektor 22 und einen vierten Photodetektor 24 auf. Weiterhin sind ein Verstärker 25 und ein Kodensator 26 zur Gleichstromabtrennung und Verstärkung vorgesehen. Das von den in den Pits gespeicherten Daten ausgehende Datensignal wird mit dem dritten Photodetektor 22 detektiert, dem das vom Aufzeichnungsträger 5 reflektierte Licht über den ersten Prismenstrahlteiler 3, den zweiten Prismenstrahlteiler 19, der fünfte Linse 20 und den dritten Prismenstrahlteiler 21 zugeführt wird. Das von den in den magnetischen Domänen gespeicherten Daten ausgehende Datensignal bzw. RAM-Signal wird analog zu Fig. 1 mit dem ersten und zweiten Photodetektor 9, 11 detektiert und dem ersten Differenzverstärker 12 zugeführt. Das von den Pits des Aufzeichnungsträgers 5 ausgehende Datensignal, das mit dem dritten Photodetektor 22 detektiert wird, gelangt über den Verstärker 25 und den Kondensator 26, die an dem dritten Photodetektor 22 angeschlossen sind, zu einem Differenzierglied 14 und dem Teiler 16. Das differenzierte ROM-Signal E' wird dann analog Fig. 1 einem zweiten Differenzverstärker 15 zugeführt, an dem gleichzeitig das mit dem ersten Verstärker 12 gebildete Datensignal MS angelegt wird. Am zweiten Differenzverstärker 15 ist wiederum der Teiler 16 angeschlossen, mit dem eine Abtrennung des amplitudenmodulierten Anteils im RAM-Signal vorgenommen wird. Am Ausgang des Teilers 16 steht dann das um Rauschanteile verringerte Datensignal RAM-OUT bereit. Das Ausgangssignal des ersten Differenzverstärkers 12, der ein Subtrahiertverstärker ist, enthält die Polarisationsstörungen bzw. das Polarisationsrauschen der Pitkanten. Dieses Rauschen, das dem Differentialsignal des ROM-Signals sehr ähnlich ist, wird dann durch das Differenzierglied 14 und den Differenzverstärker 15 vom Differenzsignal zwischen dem ersten und zweiten Photodetektor 9, 11 abgetrennt.

Bei dieser als mittelbare Rauschsignalverringerung des Datensignals bezeichneten Art der Rauschsignalverringerung wird das zur Rauschsignalverringerung verwendete elektrische Signal E' nicht unmittelbar durch den ersten und zweiten Photodetektor 9, 11 detektiert, sondern es wird ein dritter Photodetektor 22 verwendet, der jedoch gleichzeitig zur Detektion des Spurfehlersignals verwendbar ist. Die in Fig. 2 dem dritten Prismenstrahlteiler 21 nachgeordnete sechste Linse 23 und der vierte Photodetektor 24 dienen insbesondere der Regelung der Fokussierung des Lichtstrahles auf dem Aufzeichnungsträger 5. Auch bei dieser Art der Rauschanteilverringerung im Datensignal und Trennung der Datensignale, die von den in den Pits gespeicherten Daten und den in den magnetischen Domänen gespeicherten Daten ausgehen, ist keine Rückkopplung bzw. Beeinflussung der Lichtquelle 1 erforderlich. Die angegebenen Ausführungwege unterscheiden sich lediglich hinsichtlich der Art der Erzeugung des Datensignals ROM-OUT, das im Fig. 1 entsprechenden Ausführungsbeispiel auf elektrischem Signalweg und bei dem Fig. 2 entsprechenden Ausführungsweg im optischen Bereich gebildet wird.

## Patentansprüche

1. Verfahren zum Verringern der Rauschenanteile im Datensignal einer optischen Abtastvorrichtung zum Lesen und/oder Beschreiben eines magneto-optischen Aufzeichnungsträgers, wobei eine Lichtquelle (1) Licht auf den Aufzeichnungsträger (5) strahlt und wobei das vom Aufzeichungsträger (5) reflektierte Licht in Abhängigkeit von seiner Polarisationsrichtung auf einen ersten Photodetektor (9) oder auf einen zweiten Photodetektor (11) gelenkt wird, **dadurch gekennzeichnet,** daß das vom Aufzeichnungsträger (5) reflektierte Licht mit mindestens einem Photodetektor (22 bzw. 9 und 11) in ein elektrisches Signal (E) umgewandelt wird, das mit einem Differenzierglied (14) differenziert und nach der Differentiation zum Verringern von Rauschanteilen im Datensignal verwenaet wird.

2. Verfahren nach Anspruch 1, **dadurch gekennzeichnet**, daß das zum Verringern von Rauschanteilen im Datensignal verwendete elektrische Signal (E) von zwei, jeweils eine Polarisationsrichtung detektierenden Photodetektoren (9,11) durch Summation der Photodetektorsignale bereitgestellt wird.

3. Verfahren nach einem der Ansprüche 1 und 2, **dadurch gekennzeichnet**, daß Rauschanteile im Datensignal durch Subtraktion des differenzierten elektrischen Signals (E') in einem Differenzverstärker (15), dem das Differenzsignal der mit dem ersten und dem zweiten Photodetektor (9, 11) detektierten Signale zugeführt wird, verringert werden.

4. Optische Abtastvorrichtung zur Durchführung des Verfahrens nach Anspruch 1, in welcher ein von einer Lichtquelle (1) erzeugter Lichtstrahl über eine erste Linse (2), einen ersten Prismenstrahlteiler (3) und eine zweite Linse (4) auf einen Aufzeichnungsträger (5) strahlt, wobei der vom Aufzeichnungsträger (5) reflektierte Lichtstrahl über die zweite Linse (4) zum ersten Prismenstrahlteiler (3) zurückläuft, wo er mindestens über einen Polarisationsstrahlteiler (7) und über eine dritte Linse (8) auf einen ersten Photodetektor (9) sowie über eine vierte Linse (10) auf einen zweiten Photodetektor (11) gelenkt wird und der Ausgang des ersten Photodetektors (9) mit einem Subtrahiereingang eines ersten Differenzverstärkers (12) und der Ausgang des zweiten Photodetektors (11) mit einem Additionseingang des ersten Differenzverstärkers (12) verbunden ist und wobei am Ausgang des ersten Differenzverstärkers (12) ein Datensignal (MS) abnehmbar ist, das in den magnetischen Domänen des Aufzeichnungsträgers (5) gespeicherte Daten enthält und der Ausgang des ersten Photodetektors (9) mit dem einen und der Ausgang des zweiten Photodetektors (11) mit dem anderen Eingang eines Summationsverstärkers (13) verbunden sind, **dadurch gekennzeichnet,** daß am Ausgang des Summationsverstärkers (13) ein Differenzierglied (14) angeschlossen ist, dessen Ausgang mit einem Subtraktionseingang eines zweiten Differenzverstärkers (15) verbunden ist und daß der Additionseingang des zweiten Differenzverstärkers (15) am ein Datensignal (MS) führenden Ausgang des ersten Differenzverstärkers (12) angeschlossen ist.

5. Optische Abtastvorrichtung zur Durchführung des Verfahrens nach Anspruch 1, in welcher der von der Lichtquelle (1) erzeugte Lichtstrahl über eine erste Linse (2), einen ersten Prismenstrahlteiler (3) und eine zweite Linse (4) auf den Aufzeichungsträger (5) strahlt, wobei der vom Aufzeichungsträger (5) reflektierte Lichtstrahl über die zweite Linse (4) zum ersten Prismenstrahlteiler (3) zurückläuft, wo er mindestens über eine λ/2-Platte (6), über einen Polarisationstrahlteiler (7) und über eine dritte Linse (8) auf einen ersten Photodetektor (9) sowie über eine vierte Linse (10) auf einen zweiten Photodetektor (11) gelenkt wird und der Ausgang des ersten Photodetektors (9) mit einem Subtrahiereingang eines ersten Differenzverstärkers (12) und der Ausgang des zweiten Photodetektors (11) mit einem Additionseingang des ersten Differenzverstärkers (12) verbunden ist und wobei am Ausgang des ersten Differenzverstärkers (12) ein Datensignal (MS) abnehmbar ist, das in den magnetischen Domänen des Aufzeichnungsträgers (5) gespeicherte Daten enthält, zwischen der λ/2-Platte (6) und dem ersten Prismenstrahlteiler (3) ein zweiter Prismenstrahlteiler (19) angeordnet ist und ein dritter Photodetektor (22) vorgesehen ist, dem mindestens über eine fünfte Linse (20) und dem zweiten Prismenstrahlteiler (19) der vom Aufzeichnungsträger (5) reflektierte Lichtstrahl zugeführt wird, sowie am dritten Photodetektor (22) ein Verstärker (25) und ein Kondensator (26) angeschlossen sind, **dadurch gekennzeichnet,** daß ein Differenzierglied (14) vorgesehen ist, dem ein vom dritten Photodetektor (22) bereitgestelltes elektrisches Signal (E) zugeführt wird und daß der Ausgang des Differenziergliedes (14) an einem Subtraktionseingang eines zweiten Differenzverstärkers (15) angeschlossen ist, dessen Additionseingang mit dem Ausgang des ein Datensignal (MS) führenden ersten Differenzverstärkers (12) verbunden ist.

6. Optische Abtastvorrichtung nach einem der Ansprüche 4 oder 5, **dadurch gekennzeichnet,** daß das Differenzierglied (14) ein Differentialverstärker ist.

7. Optische Abtastvorrichtung nach einem der Ansprüche 4 bis 6, **dadurch gekennzeichnet,** daß ein das Datensignal bereitstellender Dividierer bzw. Teiler (16) vorgesehen ist, der am Ausgang des zweiten Differenzverstärkers (15) und am Eingang des Differenziergliedes (14) angeschlossen ist.

## Claims

1. Method for the reduction of the noise components in the data signal for an optical scanning device for the reading and/or writing of a magneto optic record carrier wherein a light source (1) radiates light onto the record carrier (5) and wherein the light reflected from the record carrier (5) is guided in dependence on its direction of polarisation onto a first photo detector (9) or onto a second photo detector (11), characterised in that, the light reflected from the record carrier (5) is converted by at least one photo detector (22 or 9 and 11) into an electrical signal (E) which is differentiated by a differentiating circuit (14) and is used after the differentiation for the reduction of the noise components in the data signal.

2. Method in accordance with Claim 1, characterised in that, the electrical signal (E) which is used for the reduction of the noise components in the data signal is provided by summing the photo detector signals from two photo detectors (9, 11) each of which detects one direction of polarisation.

3. Method in accordance with either of Claims 1 and 2, characterised in that, noise components in the data signal are reduced by subtraction of the differentiated electrical signal (E') in a differential amplifier (15) to which the difference signal of the signals detected by the first and the second photo detector (9, 11) is supplied.

4. Optical scanning device for carrying out the method in accordance with Claim 1, wherein the light beam produced by the light source (1) shines through a first lens (2), a first prismatic beam splitter (3) and a second lens (4) onto the record carrier (5), wherein the light beam reflected from the record carrier (5) returns via the second lens (4) to the first prismatic beam splitter (3) where it is guided via at least one polarisation beam splitter (7) and via a third lens (8) onto a first photo detector (9) as well as via a fourth lens (10) onto a second photo detector (11) and the output of the first photo detector (9) is connected to a subtracting input of a first differential amplifier (12) and the output of the second photo detector (11) is connected to an adding input of the first differential amplifier (12) and wherein a data signal (MS), which contains items of data stored in the magnetic domains of the record carrier (5), is derivable at the output of the first differential amplifier (12) and the output of the first and of the second photo detector (9, 11) are connected respectively to the one and to the other input of a summing amplifier (13), characterised in that, a differentiating circuit (14) whose output is connected to a subtracting input of a second differential amplifier (15) is connected to the output of the summing amplifier (13), the adding input of the second differential amplifier (15) is connected to an output of the first differential amplifier (12) carrying a data signal (MS).

5. Optical scanning device for carrying out the method in accordance with Claim 1, wherein the light beam produced by the light source (1) shines through a first lens (2), a first prismatic beam splitter (3) and a second lens (4) onto the record carrier (5), wherein the light beam reflected from the record carrier (5) returns via the second lens (4) to the first prismatic beam splitter (3) where it is guided via at least one λ/2 plaste (6), a polarisation beam splitter (7) and via a third lens (8) onto a first photo detector (9) as well as via a fourth lens (10) onto a second photo detector (11) and the output of the first photo detector (9) is connected to a subtracting input of a first differential amplifier (12) and the output of the second photo detector (11) is connected to an adding input of the first differential amplifier (12) and wherein a data signal (MS), which contains items of data stored in the magnetic domains of the record carrier (5), is derivable at the output of the first differential amplifier (12), a second prismatic beam splitter (19) is arranged between the λ/2 plate (6) and the first prismatic beam splitter (3) and a third photo detector (22) is provided to which the light beam reflected from the record carrier (5) is supplied via at least a fifth lens (20) and the second prismatic beam splitter (19), and also an amplifier (25) and a capacitor(26) are connected to the third photo detector (22), characterised in that, a differentiating circuit (14) is provided to which an electrical signal (E) provided by the third photo detector (22) is supplied and the output of the differentiating circuit (14) is connected to a subtracting input of a second differential amplifier (15) whose adding input is connected to the output of the first differential amplifier (12) supplying a data signal (MS).

6. Optical scanning device in accordance with either of Claims 4 and 5, characterised in that, the differentiating circuit (14) is a differential amplifier.

7. Optical scanning device in accordance with any of Claims 4 to 6, characterised in that, a divider or splitter (16) supplying the data signal is provided which is connected to the output of the second differential amplifier (15) and to the input of the differentiating circuit (14).

## Revendications

1. Méthode pour diminuer les composantes de bruit dans un signal de données d'un dispositif de lecture optique pour lire et/ou écrire sur un support d'enregistrement magnéto-optique, dans laquelle une source de lumière (1) rayonne de la lumière sur le support d'enregistrement (5) et dans laquelle la lumière réfléchie par le support d'enregistrement (5) est en fonction de sa direction de polarisation déviée sur un premier photo-détecteur (9) ou sur un second photo-détecteur (11), caractérisée en ce que la lumière réfléchie par le support d'enregistrement (5) et transformée par au moins un photo-détecteur (22 respectivement 9 et 11) en un signal électrique (E) qui est dérivé à l'aide d'un membre de dérivation (14), et suite à la dérivation est utilisé pour la diminution des composantes de bruit dans le signal de données.

2. Méthode selon la revendication 1, caractérisée en ce que le signal électrique (E) utilisé pour la réduction des composantes de bruit dans le signal de données est obtenu à partir de deux photo-détecteurs détectant chacun une direction de polarisation en additionnant les signaux des photo-détecteurs.

3. Méthode selon l'une des revendications 1 ou 2, caractérisée en ce que les composantes de bruit dans le signal des données sont réduites en soustrayant le signal électrique dérivé (E') dans un amplificateur de soustraction (15) qui reçoit le signal de différences entre les signaux détectés à l'aide du premier et de second photo-détecteur (9, 11).

4. Dispositif de lecture optique pour mettre en oeuvre la méthode selon la revendication 1, dans lequel un rayon de lumière provenant d'une source de lumière (1) rayonne sur un support d'enregistrement (5) par l'intermédiaire d'une première lentille (2), d'un premier prisme séparateur de rayon (3) et d'une seconde lentille (4), le rayon de lumière reflété par le support d'enregistrement 5 revenant par l'intermédiaire de la seconde lentille (4) vers le premier prisme séparateur de rayon (3) où il est au moins dévié vers un premier photo-détecteur (9) par l'intermédiaire d'un polarisateur séparateur de rayon (7) et d'une troisième lentille (8) et vers un deuxième photo-détecteur (11) par l'intermédiaire d'une quatrième lentille (10), et la sortie du premier photo-détecteur (9) étant connectée avec une entrée de soustraction d'un premier amplificateur de soustraction (12) et la sortie d'un second photo-détecteur (11) étant connectée à une entrée d'addition du premier amplificateur de soustraction (12) et un signal de données qui contient les données stockées dans les domaines magnétiques du support d'enregistrement (5) est recueillable à la sortie du premier amplificateur de soustraction (12), et la sortie du premier photo-détecteur (9) étant connectée à l'une des entrées d'un amplificateur d'addition 13 et la sortie du second photo-détecteur (11) étant connectée à l'autre entrée d'addition (13), caractérisé en ce qu'un membre de dérivation (14) qui a sa sortie connectée à une entrée de soustraction d'un second amplificateur de soustraction (15) est connecté à la sortie de l'amplificateur d'addition (13) et que l'entrée d'addition du second amplificateur de soustraction (15) est connectée à la sortie du premier amplificateur de soustraction (12) qui livre un signal de données (MS).

5. Dispositif de lecture optique pour mettre en oeuvre la méthode selon la revendication 1, dans lequel le rayon de lumière provenant d'une source de lumière (1) rayonne sur le support d'enregistrement (5) par l'intermédiaire d'un premier prisme séparateur de rayon (3) et d'une seconde lentille (4), le rayon de lumière réfléchi par le support d'enregistrement (5) revenant par l'intermédiaire de la seconde lentille 4 vers le premier prisme séparateur de rayon (3) où il est au moins dirigé sur un premier photo-détecteur (9) par l'intermédiaire d'une plaque - λ/2 (6), d'un polarisateur séparateur de rayon (7) et d'une troisième lentille (8), ainsi que sur un second photo-détecteur (11) par l'intermédiaire d'une quatrième lentille (10), et la sortie du premier photo-détecteur (9) étant connectée à une entrée de soustraction d'un premier amplificateur de soustraction (12) et la sortie du second photo-détecteur (11) étant connectée à une entrée d'addition du premier amplificateur de soustraction (12), un signal de donnée qui contient les données stockées dans les domaines magnétiques du support d'enregistrement 5 pouvant être recueilli à la sortie du premier amplificateur de soustraction (12), un second prisme séparateur de rayon (19) étant disposé entre la plaque - λ/2 (6) et le premier prisme séparateur de rayon (3), et un troisième photo-détecteur (22) étant prévu auquel on fait au moins parvenir le rayon de lumière réfléchi par le support d'enregistrement (5) par l'intermédiaire d'une cinquième lentille (20) et du second prisme séparateur de rayon (19), et un amplificateur (25) et un condensateur (26) étant connectés au troisième photo-détecteur (22), caractérisé en ce qu'il est prévu un membre de dérivation (14) auquel est fourni un signal électrique (E) produit par le troisième photo-détecteur (22) et que la sortie du membre de dérivation (14) est connectée à une entrée de soustraction d'un deuxième amplificateur de soustraction (15) qui a son entrée d'addition connectée à la sortie du premier amplificateur de soustraction (12) ayant un signal de données (MS).

6. Dispositif de lecture optique selon l'une des revendications 4 ou 5, caractérisé en ce que le membre de dérivation (14) est un amplificateur de dérivation.

7. Dispositif de lecture optique selon l'une des revendication 4 à 6, caractérisé en ce qu'il est prévu respectivement un diviseur et séparateur produisant le signal de données et étant connecté à la sortie du second amplificateur de soustraction (15) et à l'entrée du membre de dérivation (14).
